# FASCICULE DE BREVET EUROPEEN

(11) **EP 1 023 154 B1**
(45) Date de publication et mention de la délivrance du brevet: **05.03.2003**
(21) Numéro de dépôt: 99936754.3
(22) Date de dépôt: 18.08.1999
(51) Int. Cl.: B29C 47/02, B60J 10/00, B60J 10/02

(54) **PROCEDE ET DISPOSITIF DE FACONNAGE D'UNE PORTION D'UN CORDON PROFILE EXTRUDE SUR UN OBJET**
VERFAHREN UND VORRICHTUNG ZUM FORMEN EINES TEILS EINER AUF EINEN GEGENSTAND EXTRUDIERTEN PROFILLEISTE
METHOD AND DEVICE FOR FURNACE-WORK PRODUCTION OF AN EXTRUDED STRING RIM PORTION ON AN OBJECT

(30) Priorité: 18.08.1998 DE 19837348
(43) Date de publication de la demande: 02.08.2000
(73) Titulaire: SAINT-GOBAIN GLASS FRANCE, 92400 Courbevoie (FR)
(72) Inventeur: CORNILS, Gerd, D-52399 Merzenich-Girbelsrath (DE); FISCHER, Florian, D-52070 Aachen (DE); VERBEEK, Stefan, D-52525 Waldfeucht-Haaren (DE)
(74) Mandataire: Cardin, Elise
(86) Numéro de dépôt international: FR9902010
(87) Numéro de publication internationale: WO00010793

(56) Documents cités:
- EP-A- 0 524 060
- DE-A- 3 930 414
- DE-A- 4 326 179
- DE-A- 4 445 258
- DE-U- 9 011 573

## Description

L'invention se rapporte au domaine de la fabrication d'objets munis d'éléments profilés en matière plastique, tels que des vitrages munis de profilés ornementaux ou d'étanchéité. Elle concerne plus particulièrement un procédé pour façonner une portion d'un cordon profilé extrudé sur un objet, et des articles en résultant, ainsi qu'un dispositif spécialement étudié pour mettre en oeuvre ce procédé.

Il est généralement connu de déposer des cordons profilés en polymère, par exemple le long du bord d'une vitre, par extrusion continue et de les utiliser directement comme profil d'étanchéité, notamment pour des vitrages montés par collage dans un cadre. Des sections appropriées de profils facilitent, d'une part, le centrage du vitrage lors de son montage dans un cadre ou châssis, par exemple dans une baie de carrosserie, et garantissent, d'autre part, la position du vitrage durant le temps de durcissement de la colle usuellement employée. En comparaison avec le moulage par injection de tels profils, également connu, l'extrusion présente l'avantage d'une plus grande flexibilité car il ne faut pas garder un moule spécifique à chaque forme de vitre, mais il suffit de guider une filière d'extrusion avec une section calibrée le long du bord de la vitre, pilotée par un robot programmable, avec un débit de matière défini, généralement continu.

Parfois, il est aussi demandé de recouvrir des parties anguleuses, dans l'ouverture de fenêtre avec le cordon du profil d'étanchéité. En comparaison avec la section principale du cordon profilé, qui est prédéterminée de manière fixe par la forme calibrée de la filière d'extrusion, on a besoin de plus de matière dans de telles zones d'angle. Selon le brevet DE-C-196 04 397, il existe une filière d'extrusion dont la section peut augmenter automatiquement dans les zones d'angle d'une vitre. En outre, la filière comprend deux canaux pour l'amenée du polymère, dans chacun desquels le débit volumique peut être réglé indépendamment l'un de l'autre par des vannes. Globalement, la matière supplémentaire nécessaire par comparaison avec le cordon de profil normal est extrudée en passage continu avec la section souhaitée. Une telle filière est cependant très coûteuse à la fabrication.

II est également connu (DE 4326179) d'apporter des retouches ultérieurement au profilé extrudé dans de telles zones où une modification du profil est demandée, ou dans des zones "critiques" telles que la zone de raccordement entre le début et la fin de l'extrusion.

Certaines solutions existantes adaptent ainsi la section du cordon en découpant un tronçon déterminé du cordon dans une zone d'angle ou de raccordement et en remplissant les vides ainsi créés par l'injection d'une matière additionnelle qui se joint au cordon profilé (EP-B 0 524 060), ou ajoutent de la matière supplémentaire de remplissage des angles par injection sur le cordon profilé continu de section régulière, dans une phase de travail postérieure à l'extrusion (cf. DE-C-195 37 693).

Dans la pratique, les vitrages sont, jusqu'à présent, retirés du poste d'extrusion avant la retouche du cordon profilé et sont positionnés, à nouveau, dans un poste de retouche séparé. Le poste d'extrusion a donc le meilleur taux d'occupation possible, car avant l'injection de matière supplémentaire ou la découpe partielle et le remplissage du vide créé, il faut respecter un temps d'attente jusqu'à ce que la matière extrudée soit suffisamment stabilisée.

Du brevet DE 44 45 258 C2, on sait déjà aussi retoucher la zone de raccordement entre le début et la fin d'un cordon profilé en polymère extrudé entourant le bord d'une vitre, au moyen d'un moule de pressage en plusieurs parties qui exécute un mouvement de fermeture allant du centre de la vitre vers le bord extérieur de sorte que la matière excédentaire dans la zone de raccordement soit refoulée vers l'extérieur et y soit détachée par une arête de coupe portée par l'outil de pressage. La direction particulière de fonctionnement de ce dispositif connu conduit toutefois à un montage volumineux qui ne trouve pas suffisamment de place dans le voisinage immédiat d'un poste d'extrusion. Ainsi, tous les vitrages doivent également être remis en place et repositionnés séparément dans ce dispositif.

Un autre outil de post-formage connu (DE-U-90 11 573) pour des cordons profilés en polyuréthane extrudé est également conçu d'une façon telle que les vitres doivent être positionnées par rapport au dispositif et ne peuvent donc pas être retouchées directement dans le poste d'extrusion.

Les procédés de retouche avec transfert du vitrage ont en outre l'inconvénient que les solutions proposées ne donnent pas toujours exactement le résultat attendu avec notamment des marques visibles de transition sur la zone post-formée, dues à l'adjonction de matière fraîche à côté de matière extrudée plus ancienne, qui a déjà au moins partiellement durci.

On souhaite donc trouver des procédés améliorés, avec un résultat d'aspect plus fiable, de préférence en diminuant le coût par rapport à celui actuellement engendré, dans les techniques utilisant le post-formage ou le remplissage notamment par injection, par la succession d'étapes du transfert de chaque vitrage muni du cordon profilé moulé hors du poste d'extrusion, de la mise en place et du positionnement au poste de retouche suivant et enfin du façonnage du tronçon critique.

L'invention se donne ainsi pour but de présenter un procédé qui réalise une nette amélioration de la retouche en particulier par une diminution du délai d'attente pour le post-formage de zones critiques d'un cordon profilé, notamment des zones d'angle et/ou zones de raccordement. Un dispositif correspondant, avantageusement aussi compact que possible, spécialement adapté pour la mise en oeuvre de ce procédé, peut aussi être proposé.

L'invention a ainsi pour objet un procédé pour le façonnage d'une portion d'un cordon profilé extrudé sur un objet tel que décrit dans la revendication 1.

Le procédé selon l'invention se caractérise par le fait que l'amenée de matière nécessaire au façonnage final, est réalisée directement au moment de l'extrusion, de sorte qu'après que la filière a quitté la zone concernée, on peut procéder à la retouche en même temps que l'extrusion se termine.

Le gain de temps de production implique un avantage économique certain.

En outre, comme il est procédé immédiatement à la retouche on peut diminuer les différences d'aspect entre la zone qui est extrudée de la façon usuelle et la zone qui subit le traitement supplémentaire, car la matière de la partie extrudée n'est pas encore significativement durcie et/ou réticulée lorsqu'on procède au façonnage de la partie adjacente.

Ce procédé est particulièrement utile pour réaliser localement des formes particulières dans des zones limitées de profilé, en particulier pour des zones d'angle dont la réalisation est d'autant plus délicate que l'angle est aigu.

Selon une réalisation particulière, pour le façonnage d'un angle, notamment aigu, on déplace la filière relativement à l'objet en changeant l'orientation relative de la filière par rapport à l'objet, notamment par rotation suivant l'angle souhaité, et l'on guide la filière dans la nouvelle direction ainsi obtenue, le long du côté suivant de l'objet.

Dans un cas particulier, le premier et/ou le deuxième segment s'étendent au-delà du contour de l'objet, de sorte que la portion façonnée déborde au-delà du chant de l'objet.

D'une façon générale, il n'est pas nécessaire d'interrompre le débit de matière pendant de déplacement intermédiaire de la filière.

Suivant une variant avantageuse, on forme l'accumulation de manière en déplaçant la filière, après l'extrusion du premier segment, en passant au-dessus de la zone du premier segment incluant la portion à façonner. La matière forme ainsi dans la zone concernée une sorte de ruban replié sur lui-même, dans lequel les couches superposées (ou plis) adhèrent parfaitement les unes aux autres.

En fonction notamment de la matière plastique utilisée, de la vitesse d'extrusion, de la température ambiante ou de l'hygrométrie ambiante, la matière déposée sur le premier cordon partiel peut subir une modification partielle avant que la matière du deuxième cordon partiel ne lui soit superposée. Ainsi la matière plastique dans la zone façonnée est en général relativement hétérogène, bien que donnant au cordon une cohésion satisfaisante par adhésion des couches respectives les unes aux autres.

Il peut même dans des cas extrêmes se former à la surface du premier cordon partiel une sorte de peau ou pellicule, totalement compatible avec la matière qui est déposée dessus juste après, mais qui peut apparaître si l'on examine une coupe longitudinale du produit.

La matière extrudée est avantageusement de type thermoplastique, de préférence un élastomère thermoplastique (TPE) ou une oléfine thermoplastique (TPO). On préfère des matières n'ayant pas un pouvoir collant (tackiness) excessif, afin de faciliter les opérations de façonnage notamment la séparation de la surface conformée.

Avec des thermoplastiques, il peut être avantageux de réchauffer la ou les portions de cordon à façonner avant et/ou pendant le façonnage.

L'invention a également pour objet un dispositif pour le façonnage d'une portion d'un cordon profilé extrudé sur un objet - en particulier sur une vitre - fixé dans un poste de traitement, en particulier pour la mise en oeuvre du procédé selon l'invention, dans lequel un outil calibré mobile peut être amené en contact avec ladite portion de profilé comportant une accumulation de matière initialement informe, et applique contre celle-ci une surface conformée correspondant au profil régulier du cordon profilé, et dans lequel des moyens sont prévus pour la coupe et l'enlèvement de la matière excédentaire, se caractérisant par le fait que l'outil est relié de façon localement réglable avec le poste de traitement prévu pour la pose du cordon profilé et est mobile entre une position de repos et une position de travail en contact avec l'objet fixé dans le poste de traitement, au moyen d'un dispositif d'actionnement, et en ce que des moyens sont prévus pour l'ajustement correct et automatique de la position relative entre l'outil et l'objet.

Selon un mode de réalisation préféré de l'invention, le dispositif de post-formage sera positionné automatiquement et directement après l'extrusion d'une accumulation de matière à l'endroit critique respectif le long du cordon profilé, après la poursuite du trajet de la filière d'extrusion sans transfert du vitrage à traiter et aussi avant le durcissement de la matière extrudée, afin d'amener la zone concernée du cordon profilé aux dimensions souhaitées, pour qu'elle se raccorde sans transition aux dimensions de la portion de cordon profilé voisine en cours, cependant que la matière éventuellement excédentaire sera refoulée et automatiquement séparée.

Ainsi, pour un taux d'occupation égal du poste d'extrusion, un gain de temps substantiel sera obtenu dans le traitement ultérieur des zones critiques du cordon profilé car maintenant celles-ci peuvent être formées pendant la poursuite du processus d'extrusion en ligne, et donc sans manipulations supplémentaires du vitrage qui n'est positionné qu'une seule fois dans le poste d'extrusion.

D'autres avantages du procédé sont une diminution sensible des risques d'endommagement pendant la manipulation des vitrages et la réduction ou même la disparition des coûts de retouche pour éliminer la matière excédentaire du cordon. Enfin, le besoin de place pour le poste de retouche supplémentaire dans l'atelier de fabrication disparaît également.

Dans le cas du remplissage de zones de contour anguleux, selon un développement du procédé, l'accumulation nécessaire de matière sera réalisée par l'éloignement de la filière d'extrusion par rapport au bord du vitrage, relation et nouvelle application à l'endroit de séparation par superposition de deux portions de profil. En raison de la plasticité de la matière, l'accumulation est tout d'abord informe. Juste après que la filière d'extrusion poursuive son trajet, elle sera toutefois pourtant ajustée à la section du cordon profilé au moyen de l'outil positionnable automatiquement.

D'autres particularités et avantages de l'objet de l'invention ressortent de la représentation d'un exemple de réalisation et de la description détaillée qui suit, d'un procédé et d'un dispositif selon l'invention.

Dans l'exemple du post-formage d'un angle d'un cordon profilé en élastomère thermoplastique (TPE) qui est déposé sur un vitrage,
- la Figure 1: montre un détail d'un poste d'extrusion auquel est associé un dispositif de post-formage;
- la Figure 2: est une vue de la zone d'angle immédiatement avant le post-formage d'un cordon profilé venant d'être extrudé;
- la Figure 3: est une vue d'une forme de réalisation de l'outil de post-formage avec un dispositif d'actionnement pour l'application de l'outil sur le vitrage;
- la Figure 4: est une vue en coupe partielle de l'outil de post-formage de la Figure 2, qui se trouve en position de travail sur le vitrage et sur le cordon profilé;
- la Figure 5: est une vue d'une butée prévue pour l'ajustage de l'outil de post-formage sur le chant du vitrage, détail de la Figure 3;
- la Figure 6: est une vue d'une partie inférieure du moule avec une arête de coupe prévue pour la découpe de la matière excédentaire, détail de la Figure 3; et
- la Figure 7: est une vue de la zone d'angle de la Figure 1 après le post-formage.

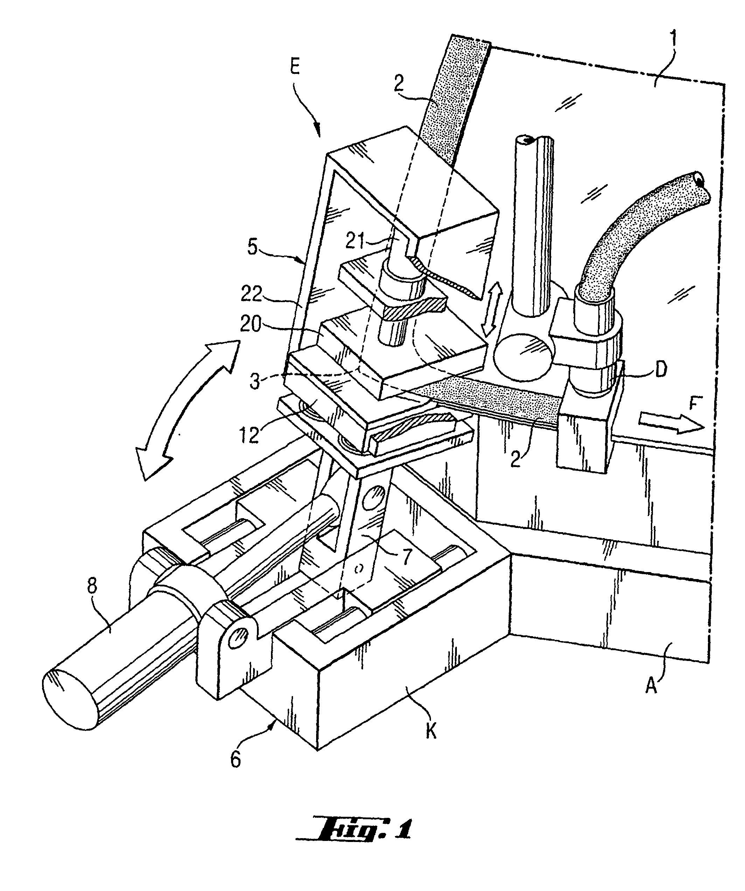

Une vitre 1 par exemple en verre de sécurité trempé monolithique est positionnée et fixée dans un poste d'extrusion E suivant la Figure 1. Y sont aussi indiqués, de manière purement schématique, un support A de même qu'une filière d'extrusion D pilotée par un robot. Cette dernière dépose directement le long d'un bord un cordon profilé 2 en élastomère thermoplastique (TPE) sur la face principale de la vitre 1, dirigée vers le haut. Sa direction de déplacement est indiquée par une flèche F vers la droite. Elle est sensiblement parallèle au bord de la vitre 1. Faisant partie du poste d'extrusion E, un outil de post-formage 5 est disposé à au moins un des angles de la vitre 1. Il est ici relié au support A par une console K, juste ébauchée. Ainsi, il peut travailler directement sur le cordon profilé 2 extrudé par la filière D. La vitre ne doit donc plus être d'abord enlevée du support A, puis repositionnée. Une description plus détaillée de cet outil de post-formage 5 et de son mode de fonctionnement est donnée ci-après.

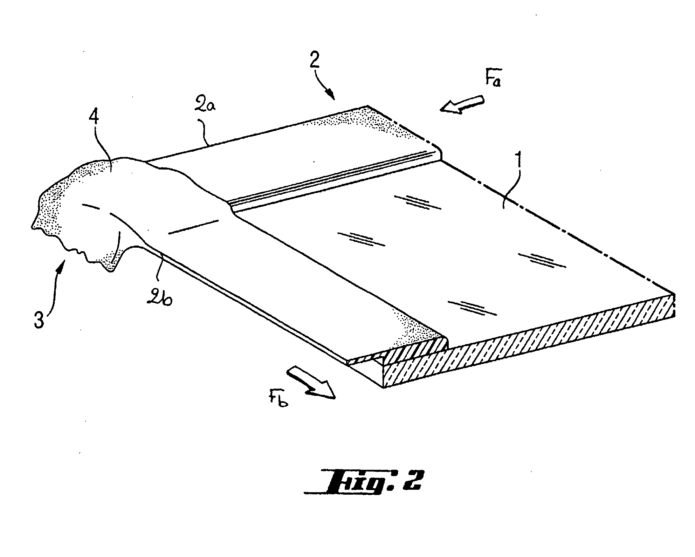

Selon la Figure 2, une accumulation 4 de TPE a été produite à un angle 3 de la vitre 1. Dans le cas présent, la filière D étant guidée le long d'un premier côté de la vitre suivant la flèche Fa, a été à cet effet amenée au-delà de l'angle 3 quand elle a atteint la zone d'angle et écartée du bord du vitrage. On forme ainsi un premier segment de cordon 2a, qui inclut la portion à façonner en angle. Ensuite, on tourne la filière et on la place de nouveau sur le même angle 3. En guidant la filière dans la nouvelle direction de progression le long du côté suivant, selon la flèche Fb, on forme un deuxième segment de cordon 2b. Il n'est pas nécessaire d'interrompre le processus d'extrusion lors du transfert de la filière.

L'extrudat est donc appliqué en double dans une zone limitée, ici en croisant les portions superposées, de manière comparable au début et à la fin du cordon profilé, à la différence près que le dépôt de la portion supérieure suit immédiatement le dépôt de la portion inférieure. La portion de cordon 2b déposée en dernier se trouve au-dessus. Sa matière peut cependant se mélanger avec le tronçon recouvert 2a non encore durci.

Il s'ensuit une accumulation de matière 4 qui est dans un premier temps informe et dont la représentation est ici purement schématique.

Selon la vitesse de déplacement de la filière et la cinétique de durcissement de la matière extrudée, notamment, cette masse informe qui peut avoir sensiblement la forme d'un ruban replié sur lui-même lorsque le débit de polymère n'est pas interrompu pendant le transfert de la filière, peut renfermer à l'interface entre les portions superposées, le cas échéant entre les plis du ruban, une interface pelliculaire due à un durcissement très limité de la matière, qui ne nuit aucunement à l'adhésion des segments 2a et 2b entre eux, donc à la cohésion de la zone façonnée 3, en dépit de sa structure interne relativement hétérogène.

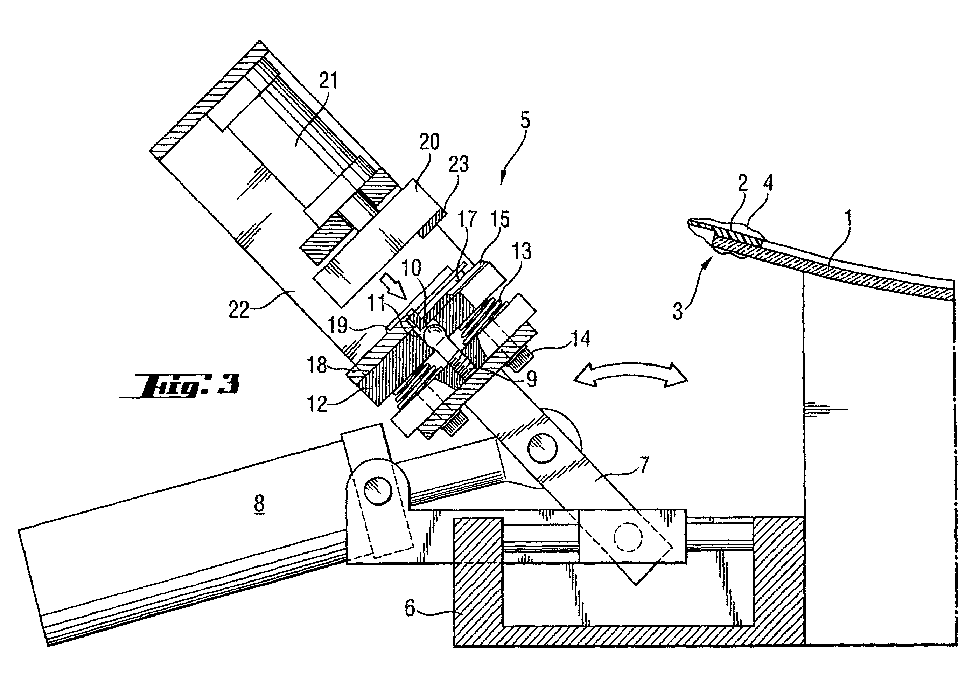

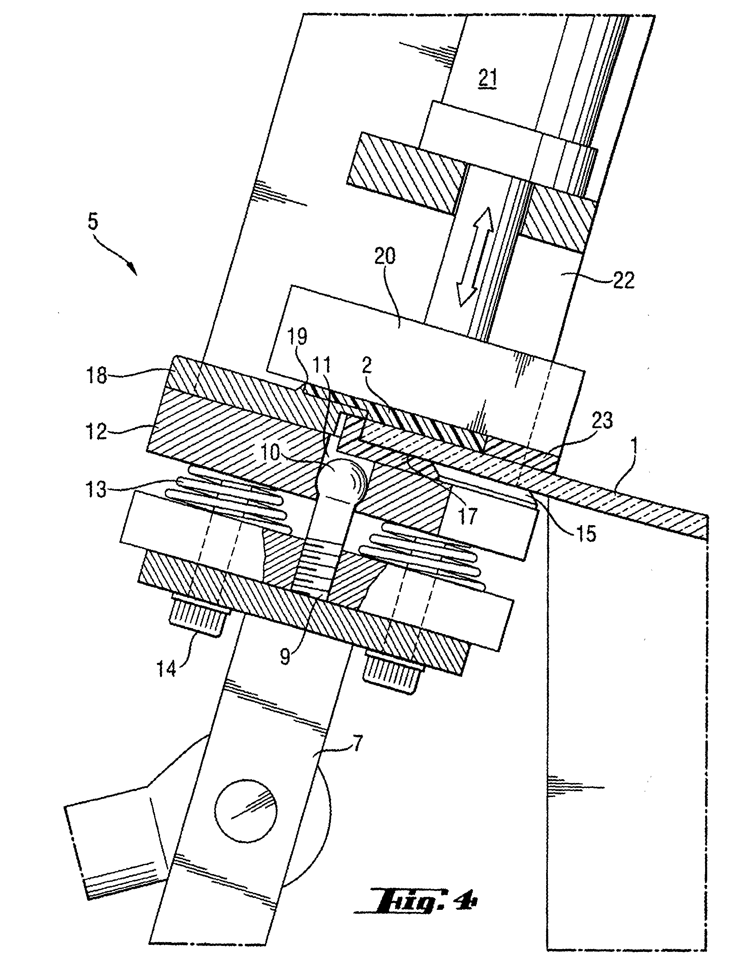

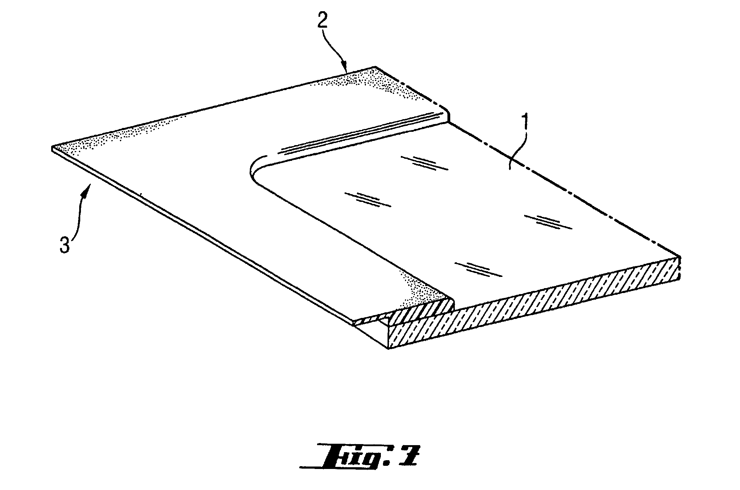

Juste après que la filière d'extrusion a quitté cette zone d'angle pour poursuivre l'application du cordon profilé 2, l'outil 5 est transféré de sa position de repos, représentée dans la Figure 3, dans sa position de travail, représentée dans la Figure 4, par un mouvement basculant et ceci bien avant la fin du processus d'extrusion, donc sans devoir changer la vitre 1 de position ou d'emplacement. Alors que toute collision entre la filière D et l'outil 5 est exclue en position de repos, la position de travail- comme le montre clairement la Figure 1- se trouve dans la zone de travail de la filière d'extrusion. En position de travail, l'outil 5 est amené en contact avec la vitre 1 et le cordon profilé 2 qui est encore façonnable. Il donne sa forme à la matière accumulée 4 que l'on peut toujours voir sur la Figure 3 et réalise la configuration définitive de l'angle du cordon profilé 2, comme cela est illustré dans la Figure 7.

Comme le délai entre la formation de la masse informe 4 et l'action de l'outil 5 est très court, le durcissement superficiel du cordon n'est pas significatif et la surface conformée de l'outil 5 ne laisse quasiment pas de trace de part et d'autre du moule à la limite de la zone façonnée, ce qui est un avantage notable par rapport aux procédés connus. Dans ce qui suit, il sera discuté encore plus en détail des particularités de l'outil 5 et de son mode de fonctionnement. Comme support 6 de l'outil, on utilise de préférence une table, ou un équivalent, qui est reliée fermement au poste d'extrusion E (support A et console K dans la Figure 1). Le montant 7 de l'outil est mobile, oscillant ici autour d'un axe relié à la base 6. Un actionneur 8, qui est représenté ici par un vérin pneumatique, se fixe au montant 7 et sert pour le mouvement de va-et-vient de l'outil 5 entre les positions de travail et de repos.

De plus, la position de l'outil est totalement réglable à l'intérieur du poste afin que différentes formes de vitres puissent être traitées. Le réglage est représenté ici par les glissières d'un chariot. Il peut toutefois être réalisé aussi de toute autre manière appropriée. Naturellement, un tel outil 5 peut être disposé, si nécessaire, à chaque angle de la vitre dans le poste d'extrusion. Si, par exemple, plusieurs angles dans un cordon profilé devaient être demandés par l'acheteur du vitrage, alors on devrait de préférence adjoindre au poste d'extrusion le nombre correspondant d'outils compacts de post-formage pour obtenir l'avantage de gain de temps lié à l'invention.

Dans la Figure 3, l'outil de post-formage est ouvert tandis que la Figure 4 le montre en cours de travail avec les parties de moule fermées. Celles-ci enserrent le bord de la vitre 1 sur trois côtés et enferment donc complètement le cordon profilé 2 d'une façon connue en soi. Comme cela résulte de la Figure 1, le mouvement de l'outil 5 vers la vitre 1 s'exécute de préférence approximativement dans la direction de la bissectrice de l'angle 3.

Dans la forme de réalisation représentée, un tourillon 9 avec une tête sphérique (rotule) 10 s'élève du montant 7 vers l'outil. Cette rotule est reprise dans un évidement 11 dans une plaque de base 12 de l'outil. Celle-ci est soutenue souplement à distance du montant 7 au moyen de ressorts d'appui 13 (réalisés ici par des ressorts hélicoïdaux coniques). Elle est donc montée sur le montant 7 tout en étant mobile dans les trois directions autour du centre de la rotule 10. En outre, elle peut être orientable (tourner) dans son plan principal, au moins de façon limitée. Les ressorts d'appui 13 la centrent dans une position initiale. La position angulaire de la plaque de base 12 par rapport au montant 7 peut être préréglée au moyen des vis de réglage 14 qui sont insérées à travers les ressorts d'appui 13. Une sonde de température, non représentée, peut être montée sur la plaque de base et servir à la régulation d'un dispositif de chauffage ou de maintien à température de la plaque de base.

Il est généralement avantageux de chauffer l'outil de post-formage pour le post-formage des élastomères thermoplastiques. Il peut en particulier être utile aussi de maintenir chaudes les zones de raccordement du tronçon de cordon profilé à post-former afin d'obtenir un raccordement aussi lisse que possible. Le coût en chaleur n'est toutefois pas élevé dans le cas du procédé discuté ici parce que, entre le dépôt de l'accumulation de matière et le post-formage, il ne se passe qu'un très court intervalle de temps et le cordon profilé n'est donc pas encore refroidi.

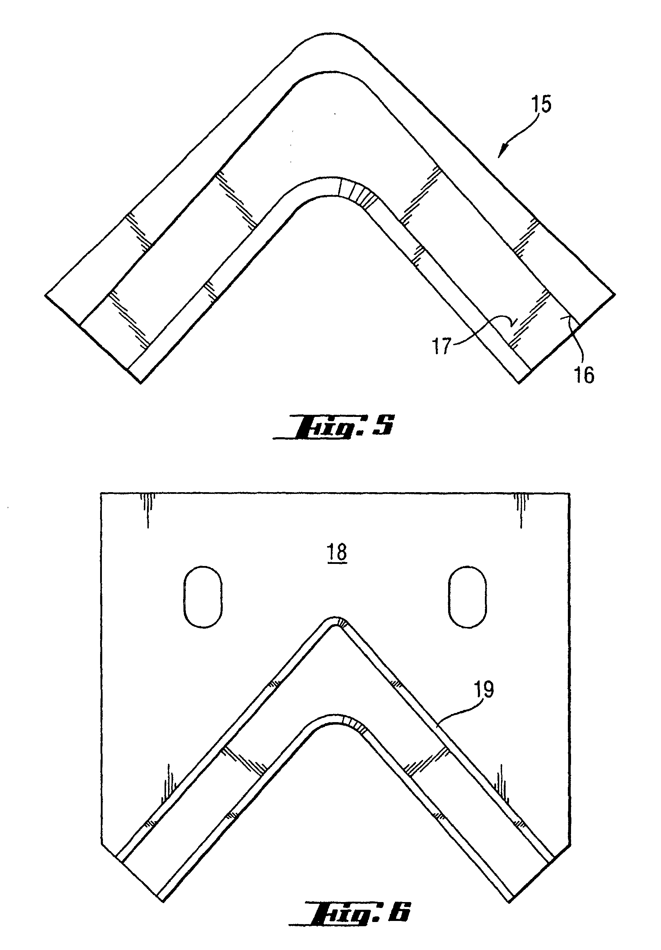

Une butée 15, démontable, est assemblée solidement à la plaque de base 12. Une vue complète agrandie en est donnée en détail dans la Figure 5. La butée forme nettement un dièdre sur le croquis. Sur la face supérieure de celle-ci, on a usiné un rebord d'étanchéité 16 qui est exactement adapté à l'angle 3 de la vitre 1 de même qu'au moule de retouche du chant périphérique de celle-ci. A cet effet, ce rebord d'étanchéité peut être en particulier muni d'une gorge. Elle se transforme progressivement en une surface de pose 17. Sur le bord extérieur de la surface de pose 17, un chanfrein est prévu comme biseau d'engagement pour appliquer la butée 15 contre la vitre 1.

Dans la Figure 4, on voit bien que le rebord d'étanchéité 16 est appliqué contre le bord extérieur (chant) de la vitre 1, dans la position de travail de l'outil 5. La surface de pose 17 se pose à plat sur la face inférieure de la vitre et aligne ainsi l'outil 5 dans le plan du bord de la vitre. Pour ce processus, il ne faut aucun entraînement propre. Comme cela est reproduit sur l'illustration, le cordon profilé est appliqué, par la filière d'extrusion, exactement sur la face supérieure de la vitre 1 de telle sorte que, lors de l'engagement de la butée 15 sur la vitre 1, aucune matière du polymère ne peut être coincée entre son chant périphérique et le rebord d'étanchéité 16.

Ainsi, quand l'outil est amené et appuyé sur la vitre par l'actionneur 8, la plaque de base 12 - et donc l'ensemble de l'outil 5 - peut, avec son montage mobile être ajustée automatiquement exactement à la position de la vitre et à d'éventuels écarts dimensionnels de la découpe et de la taille des chants de la vitre.

La butée 15 est composée de préférence d'une matière plastique à faible frottement, par exemple du PTFE, car la butée aborde la vitre 1 par le dessous lors du basculement de l'outil et glisse sur cette face inférieure. Le mouvement de basculement peut être, en général, représenté aussi par un mouvement d'insertion rectiligne. De préférence, l'outil est alors appliqué obliquement à partir du côté de la vitre non pourvu du cordon profilé.

Comme le croquis de la Figure 6 en représente un agrandissement, une partie inférieure de moule 18 est en outre fixée sur la plaque de base 12. Ainsi que mentionné plus haut, le cordon profilé 2 se trouve uniquement sur la face supérieure de la vitre 1, avec une lèvre débordant du périmètre de la vitre, et n'a aucun contact avec le chant périphérique. L'extrudat à appliquer doit être suffisamment visqueux pour permettre une telle mise en forme. La partie inférieure de moule 18 est fixée, par rapport à la butée 15, de celle sorte qu'elle soutienne par en dessous la zone à post-former (lèvres) du cordon profilé 2 et en même temps recouvre complètement la butée 15 vis-à-vis de la masse extrudée. Sur sa face supérieure habituellement lisse, une arête de coupe 19 est formée avec une section en dents de scie. Son flanc abrupt (de pente la plus raide par rapport au plan de la vitre) est dirigé vers le cordon profilé, et sa hauteur correspond à l'épaisseur souhaitée de la lèvre débordante du cordon profilé 2. Comme on le voit sur le croquis, la partie inférieure de moule forme un angle dont le côté intérieur suit encore une fois le profil du chant de la vitre à une distance constante dans la zone d'angle.

Comme partie supérieure du moule, l'outil 5 comprend de plus un poinçon 20 qui peut être levé et abaissé par rapport à la plaque de base 12 à l'aide d'un vérin 21. Une liaison rigide 22 entre le vérin et la plaque de base garantit que le poinçon 20 suit exactement le mouvement d'engagement lors de l'application de l'outil 5 sur la vitre 1. Sur la face de moulage essentiellement plate du poinçon 20, se trouve un joint plat 23 appliqué en surépaisseur sur la face du poinçon. L'épaisseur de celui-ci est prédéterminée par la hauteur souhaitée du cordon profilé 2 sur la vitre 1.

En position de repos et durant le transfert de l'outil dans sa position de travail, le poinçon 20 est relevé. L'ouverture entre le poinçon 20 et la partie inférieure de moule doit être assez grande pour que le poinçon 20 relevé et le joint 23 ne viennent pas en contact avec le cordon profilé 2 lors de l'amenée de l'outil en position de travail.

Après l'alignement automatique de l'outil sur l'angle de la vitre, le poinçon 20 est abaissé sur la vitre 1 à l'aide du vérin 21. Ainsi, le joint plat se pose directement sur la face supérieure de la vitre 1. Dans la zone d'accumulation de matière c'est-à-dire dans l'angle aigu, il se forme maintenant une cavité ou tunnel qui est ouvert de part et d'autre de l'angle 3 et dont la section correspond au profil normal du cordon profilé et est limitée ou circonscrite par :
- la face supérieure de la vitre (sur la surface de contact prévue);
- la surface de la partie inférieure de moule jusqu'au bord de l'arête de coupe (en dessous de la lèvre);
- la face inférieure du poinçon de pressage jusqu'au joint plat; et
- le périmètre du joint plat se trouvant du côté du bord de la vitre.

Sur son tracé longitudinal, la section de cette cavité ou tunnel peut être de toute forme désirée, de sorte que l'on peut obtenir en particulier le façonnage souhaité dans la zone d'angle avec une lèvre étirée en angle comme cela est reproduit dans la Figure 7. Si nécessaire, la zone d'angle peut aussi être façonnée avec une nervure ou analogue parcourant la face supérieure du cordon profilé.

Le contour extérieur cité du joint plat 23 sert ainsi à la formation et à la limitation du bord du cordon profilé 2, tourné vers le milieu de la vitre, dans la zone d'angle. Il forme ainsi également un angle qui correspond à l'angle d'ouverture de la partie inférieure du moule et s'aligne exactement sur celle-ci.

Dans la zone d'angle, cette brisure est cependant suffisamment arrondie pour qu'il se forme un petit espace de refoulement entre la zone d'accumulation de matière 4 et le bord avant du joint. La matière refoulée vers le milieu de la vitre lors du post-formage peut remplir celui-ci. Sur l'autre côté se trouvant au-delà de la vitre 1, la matière excédentaire qui est refoulée dans la cavité citée est coupée entre l'arête de coupe 19 et la face inférieure du poinçon 20 et tombe hors de l'outil au plus tard lors du retour de ce dernier à sa position de repos. Des prototypes ont démontré que, en général, aucun résidu de matière ne reste collé sur l'arête de coupe et que des restes collés peuvent facilement être enlevés. Cependant, le vérin 21 du poinçon 20 ne doit pas exercer des efforts trop élevés afin que la liaison rigide 22 ne doive pas non plus être d'une conception particulièrement robuste.

Par ailleurs, la butée 15, la partie inférieure de moule 18 avec l'arête de coupe 19 et la face du poinçon 20 avec le joint 23 sont les pièces de l'outil qui doivent être fabriquées spécifiquement pour chaque forme de vitre ou chaque forme d'angle, tandis que tous les autres composants de celui-ci peuvent être standardisés pour toutes les formes de vitre. L'épaisseur du joint 23 et la hauteur de l'arête de coupe 19 par rapport à la surface de la partie de moule 18 déterminent, avec la plus grande précision, la distance entre le poinçon 20 et la vitre 1 et donc l'épaisseur de la zone d'angle post-formée du cordon profilé 2.

Il s'ensuit donc globalement une construction compacte et relativement légère de l'outil 5, qui peut de ce fait être assemblé à un poste d'extrusion existant sans devoir faire trop d'adaptation.

Le procédé et le dispositif ont certes été décrits dans le cas de réalisation d'une extrusion sur une vitre, il va sans dire que le post-formage de cordon profilé par extrusion appliqué sur d'autres objets et matières est aussi réalisable de la façon décrite sans s'écarter fondamentalement des étapes énoncées ici.

## Revendications

1. Procédé pour le façonnage d'une portion (3) d'un cordon profilé (2) extrudé sur un objet, en particulier une vitre (1), dans lequel une masse (4) de matière initialement informe est produite dans la portion (3) concernée par la superposition de deux segments (2a,2b) de profil extrudé et est mise à la forme finale désirée par contact avec une surface conformée d'un outil mobile (5), la matière excédentaire éventuelle étant automatiquement refoulée hors de l'outil pour être éliminée,
**caractérisé en ce que** l'outil mobile (5) est appliqué sur la portion à façonner (3) juste après que la filière d'extrusion (D) a quitté la zone du deuxième segment (2b) incluant cette portion, dans le poste d'extrusion (E) même, sans déplacement, transfert ou repositionnement de l'objet (1).

2. Procédé selon la revendication 1, **caractérisé en ce qu'après** la masse (4) de matière est réalisée avec les étapes suivantes :
- on guide la filière d'extrusion (D) le long d'un premier segment (2a) du parcours prévu du cordon profilé (2) incluant la portion (3) à façonner,
- on éloigne la filière (D) de l'objet (1) et on déplace la filière (D) relativement à l'objet (1) vers une position voisine de la portion (3) à façonner, notamment en passant au-dessus de la zone du premier segment (2a) incluant la portion (3) à façonner,
- on guide à nouveau la filière (D) le long d'un deuxième segment (2b) du parcours du cordon profilé (2) incluant aussi la portion (3) à façonner.

3. Procédé selon la revendication 2 pour le façonnage d'un angle (3) dans le cordon profilé (2), notamment dans un angle de l'objet, **caractérisé en ce qu'**on déplace la filière (D) relativement à l'objet (1) en changeant l'orientation relative de la filière (D) par rapport à l'objet (1), notamment par rotation suivant l'angle souhaité, et **en ce que** l'on guide la filière (D) dans la nouvelle direction ainsi obtenue.

4. Procédé selon la revendication 3, **caractérisé en ce que** le premier (2a) et/ou le deuxième (2b) segment s'étendent au-delà du contour de l'objet (1), de sorte que la portion façonnée (3) déborde au-delà du chant de l'objet (1).

5. Procédé selon l'une quelconque des revendications précédentes, **caractérisé en ce que** l'on continue de délivrer la matière extrudable par la filière (D) lorsque l'on déplace cette dernière.

6. Procédé selon l'une quelconque des revendications précédentes, **caractérisé en ce que** l'outil mobile (5) est amené automatiquement d'une position de repos à sa position de travail immédiatement après l'extrusion de la masse et la poursuite du trajet de la filière d'extrusion (D), est aligné automatiquement avec le cordon profilé (2) et est amené au contact de la masse informe (4) pour la façonner.

7. Procédé selon l'une quelconque des revendications précédentes, **caractérisé en ce que** l'outil mobile (5) est appliqué sur la portion à façonner (3) cependant que se pousuit le parcours de la filière d'extrusion (D).

8. Dispositif pour le façonnage d'une portion d'un cordon profilé (2) extrudé sur un objet - en particulier sur une vitre (1)- fixé dans un poste de traitement (E), en particulier pour la mise en oeuvre du procédé selon la revendication 1, dans lequel un outil calibré mobile (5) peut être amené en contact avec ladite portion de profilé comportant une accumulation de matière (4) initialement informe, et applique contre celle-ci une surface conformée correspondant au profil régulier du cordon profilé, et dans lequel des moyens sont prévus pour la coupe et l'enlèvement de la matière excédentaire, **se caractérisant par** le fait que l'outil (5) est relié de façon localement réglable avec le poste de traitement (E) prévu pour la pose du cordon profilé (2) et est mobile entre une position de repos et une position de travail en contact avec l'objet (1) fixé dans le poste de traitement (E), au moyen d'un dispositif d'actionnement (8), et en ce que des moyens (10, 11, 17) sont prévus pour l'ajustement correct et automatique de la position relative entre l'outil (5) et l'objet (1).

9. Dispositif selon la revendication 8, **se caractérisant par** le fait que les moyens pour l'ajustement de la position comprennent au moins une face de pose (17) à appliquer contre l'objet (1) et un appui (10, 11) à mouvement sphérique permettant l'ajustement de celle-ci parallèlement à une face de l'objet.

10. Dispositif selon la revendication 9, **se caractérisant par** le fait que l'appui à mouvement sphérique est formé d'une rotule (10) fixée à un montant (7) de l'outil (5) et d'un évidement (11) recevant celle-ci dans la plaque de base (12) de l'outil (5), laquelle plaque de base est rendue réglable dans une position de base par rapport au montant (7) par des ressorts (13).

11. Dispositif selon la revendication 9 ou 10, **se caractérisant par** le fait que l'outil (5) comprend en outre un rebord d'étanchéité (16) à appliquer contre un périmètre de l'objet.

12. Dispositif selon la revendication 11, **se caractérisant par** le fait que le rebord d'étanchéité (16) et la face de pose (17) sont formés dans une butée (15) démontable fixée sur la plaque de base (12).

13. Dispositif selon une des revendications précédentes de dispositif, **se caractérisant par** le fait que l'outil (5) comprend un poinçon (20) mobile au moyen d'un vérin (21) et possédant une surface de formage du cordon profilé (2).

14. Dispositif selon la revendication 13, **se caractérisant par** le fait qu'un joint (23) de formage est fixé sur le poinçon (20), joint qui, lors de l'application du poinçon (20) sur l'objet, entre en contact avec la face supérieure de celui-ci et avec le cordon profilé et dont l'épaisseur correspond à la hauteur du cordon profilé façonné.

15. Dispositif selon une des revendications précédentes de dispositif, **se caractérisant par** le fait que l'outil (5) comprend une arête de coupe (19) pour découper la matière excédentaire de la portion façonnée du cordon profilé (2).

16. Dispositif selon une des revendications précédentes du dispositif, **se caractérisant par** le fait que le montant (7) de l'outil (5) est réglable par rapport au poste de traitement (E) pour différentes formes d'objets.

17. Dispositif selon la revendication 16 de dispositif, **se caractérisant par** le fait que le dispositif d'actionnement comprend un moyen d'entraînement (8) relié au montant (7).

## Patentansprüche

1. Verfahren zum Ausformen eines Abschnittes (3) eines auf einen Gegenstand, insbesondere eine Glasscheibe (1), extrudierten Profilstrangs (2), wobei in dem betreffenden Abschnitt durch Übereinanderlegen zweier extrudierter Profilsegmente (2a, 2b) eine zunächst ungeformte Materialhäufung (4) erzeugt und durch Kontakt mit einer entsprechenden Oberfläche eines beweglichen Werkzeugs (5) in die endgültige gewünschte Form gebracht wird, wobei eventuell überschüssiges Material selbsttätig verdrängt und abgetrennt wird,
**dadurch gekennzeichnet, dass** das bewegliche Werkzeug (5) an den nachzuformenden Abschnitt (3) in der Extrusionsstation (E) selbst angelegt wird, unmittelbar nachdem die Extrusionsdüse den Bereich des diesen Abschnitt einschließenden zweiten Segments (2b) verlassen hat, ohne Ortsveränderung, Verlagerung oder Ausrichten des Gegenstands (1).

2. Verfahren nach Anspruch 1, **dadurch gekennzeichnet, dass** die Materialhäufung (4) mit folgenden Schritten hergestellt wird:
- man führt die Extrusionsdüse (D) entlang einem ersten Segment (2a) des vorgesehenen Verlaufs des Profilstrangs (2), der den nachzuformenden Abschnitt (3) einschließt,
- man setzt die Düse (D) von dem Gegenstand (1) ab und versetzt sie bezüglich des Gegenstands (1) in eine dem nachzuformenden Abschnitt (3) benachbarte Stellung, insbesondere indem man über den den nachzuformenden Abschnitt (3) einschließenden Bereich des ersten Segments (2a) hinwegfährt,
- man führt erneut die Düse (D) entlang einem zweiten, ebenfalls den nachzuformenden Abschnitt (3) einschließenden Segment (2b).

3. Verfahren nach Anspruch 2 zum Nachformen einer Ecke (3) in dem Profilstrang (2), insbesondere an einer Ecke des Gegenstands, **dadurch gekennzeichnet, dass** man die Düse (D) bezüglich des Gegenstands unter Änderung der Orientierung der Düse (D) gegenüber dem Gegenstand (1) versetzt, insbesondere durch Drehen um den gewünschten Winkel, und dadurch, dass man die Düse (D) in die so eingestellte neue Richtung weiterführt.

4. Verfahren nach Anspruch 3, **dadurch gekennzeichnet, dass** das erste Segment (2a) und/oder das zweite Segment (2b) sich über den Umriss des Gegenstands (1) hinaus erstrecken, so dass der nachgeformte Abschnitt (3) über die Kante des Gegenstands (1) hinausragt.

5. Verfahren nach einem der vorstehenden Ansprüche, **dadurch gekennzeichnet, dass** das Extrudieren der extrudierbaren Masse durch die Düse (D) während des Versetzens der letzteren fortgesetzt wird.

6. Verfahren nach einem der vorstehenden Ansprüche, **dadurch gekennzeichnet, dass** das bewegliche Werkzeug (5) unmittelbar nach dem Extrudieren der Materialhäufung und dem Fortführen des Laufs der Extrusionsdüse (D) selbsttätig aus einer Ruhestellung in seine Arbeitsstellung überführt wird, selbsttätig auf den Profilstrang ausgerichtet und mit diesem zum Nachformen der Materialhäufung in Kontakt gebracht wird.

7. Verfahren nach einem der vorstehenden Ansprüche, **dadurch gekennzeichnet, dass** das bewegliche Werkzeug (5) an den nachzuformenden Abschnitt (3) während des Weiterlaufens der Extrusionsdüse (D) angelegt wird.

8. Vorrichtung zum Nachformen eines Abschnitts eines auf einen in einer Bearbeitungsstation festgelegten Gegenstand -insbesondere auf eine Glasscheibe (1)- extrudierten Profilstrangs (2) insbesondere zum Durchführen des Verfahrens nach Anspruch 1, wobei ein bewegliches kalibriertes Werkzeug (5) mit dem besagten Profilabschnitt an einer zunächst ungeformten Materialhäufung (4) in Kontakt bringbar ist und an diese eine dem regelmäßigen Profil des Profilstrangs entsprechende Formoberfläche anlegt, und wobei Mittel zum Abtrennen und Abführen überschüssigen Materials vorgesehen sind, **dadurch gekennzeichnet, dass** das Werkzeug (5) einstellbar ortsfest mit der zum Ablegen des Profilstrangs (2) vorgesehenen Bearbeitungsstation (E) verbunden und mittels einer Betätigungseinrichtung (8) aus einer Ruhestellung in eine Arbeitsstellung in Kontakt mit dem in der Bearbeitungsstation (E) festgelegten Gegenstand (1) überführbar ist, und dass am Werkzeug Mittel (10, 11, 17) zum selbsttätigen korrekten Einstellen der relativen Position zwischen dem Werkzeug (5) und dem Gegenstand (1) vorgesehen sind.

9. Vorrichtung nach Anspruch 8, **dadurch gekennzeichnet, dass** die Mittel zum Einstellen der Position mindestens eine an den Gegenstand (1) anlegbare Anlagefläche (17) und eine deren Einstellen parallel zu einer Fläche des Gegenstands erlaubende sphärisch bewegliche Lagerung (10, 11) umfassen.

10. Vorrichtung nach Anspruch 9, **dadurch gekennzeichnet, dass** die sphärisch bewegliche Lagerung durch einen mit dem Ständer (7) des Werkzeugs (5) verbundenen Kugelkopf (10) und eine diesen aufnehmende Ausnehmung (11) einer Grundplatte (12) des Werkzeugs (5) gebildet ist, welche Grundplatte durch Federn (13) gegenüber dem Ständer (7) in eine Grundstellung stellbar ist.

11. Vorrichtung nach Anspruch 9 oder 10, **dadurch gekennzeichnet, dass** das Werkzeug (5) ferner eine an einen Umfangsrand des Gegenstands anlegbare Dichtkante (16) umfasst.

12. Vorrichtung nach Anspruch 11, **dadurch gekennzeichnet, dass** die Dichtkante (16) und die Anlagefläche (17) in einem austauschbar mit der Grundplatte (12) verbundenen Anschlagstück (15) ausgebildet sind.

13. Vorrichtung nach einem der vorstehenden Vorrichtungsansprüche, **dadurch gekennzeichnet, dass** das Werkzeug (5) einen mittels eines Hubantriebs (21) beweglichen Stempel (20) mit einer den Profilstrang (2) formenden Fläche umfasst.

14. Vorrichtung nach Anspruch 13, **dadurch gekennzeichnet, dass** am Stempel (20) eine formgebende Dichtung (23) befestigt ist, die beim Auflegen des Stempels (20) auf den Gegenstand in Kontakt mit dessen Oberfläche und mit dem Profilstrang gelangt und deren Dicke der Höhe des ausgeformten Profilstrangs entspricht.

15. Vorrichtung nach einem der vorstehenden Vorrichtungsansprüche, **dadurch gekennzeichnet, dass** das Werkzeug (5) eine Schneidkante (19) zum Abtrennen von überschüssigem Material von dem nachgeformten Abschnitt des Profilstrangs (2) umfasst.

16. Vorrichtung nach einem der vorstehenden Vorrichtungsansprüche, **dadurch gekennzeichnet, dass** der Ständer (7) des Werkzeugs (5) bezüglich der Bearbeitungsstation (E) auf verschiedene Formen von Gegenständen einstellbar ist.

17. Vorrichtung nach Anspruch 16, **dadurch gekennzeichnet, dass** die Betätigungseinrichtung einen mit dem Ständer verbundenen Antrieb (8) umfasst.

## Claims

1. Process for working a portion (3) of a profiled strand (2) extruded on an object, particularly a window (1), in which an initially shapeless material mass (4) is produced in the portion (3) in question by superimposing two extruded profile segments (2a, 2b) and is shaped to the desired final shape by contact with a shaped surface of a mobile tool (5), possible excess material being automatically forced back out of the tool for elimination purposes, **characterized in that** the mobile tool (5) is applied to the portion (3) to be worked just after the extrusion die (D) has left the area of the second segment (2b) including said portion, in the actual extrusion station (E), without displacement, transfer or repositioning of the object (1).

2. Process according to claim 1, **characterized in that** the material mass (4) is produced with the following stages:
- the extrusion die (D) is guided along a first segment (2a) of the path provided for the profiled strand (2) including the portion (3) to be worked,
- the die (D) is removed from the object (1) and the die (D) is displaced relative to the object (1) towards a position close to the portion (3) to be worked, more particularly passing above the area of the first segment (2a) including the portion (3) to be worked,
- the die (D) is again guided along a second segment (2b) of the path of the profiled strand (2), also including the portion (3) to be worked.

3. Process according to claim 2 for working an angle (3) in the profiled strand (2), particularly in an angle of the object, **characterized in that** the die (D) is displaced relative to the object (1) whilst changing the relative orientation of the die (D) with respect to the object (1), particularly by rotation in accordance with the desired angle and **in that** the die (D) is guided in the new direction obtained in this way.

4. Process according to claim 3, **characterized in that** the first (2a) and/or second (2b) segment extend beyond the contour of the object (1), so that the worked portion (3) projects beyond the edge of the object (1).

5. Process according to any one of the preceding claims, **characterized in that** the material extrudable by the die (D) continues to be supplied on displacing said die.

6. Process according to any one of the preceding claims, **characterized in that** the mobile tool (5) is automatically brought from a rest position into its working position immediately following the extrusion of the material and the continuation of the path of the extrusion die (D) is automatically aligned with the profiled strand (2) and is brought into contact with the shapeless material (4) in order to work it.

7. Process according to any one of the preceding claims, **characterized in that** the mobile tool (5) is applied to the portion (3) to be worked during the continuation of the travel of the extrusion die (D).

8. Device for working a portion of a profiled strand (2) extruded onto an object, particularly a window (1), fixed in a treatment station (E), particularly for performing the process according to claim 1, in which a mobile, calibrated tool (5) can be brought into contact with said profile portion with an accumulation of material (4) which is initially shapeless and to the same is applied a shaped surface corresponding to the regular profile of the profiled strand and in which means are provided for cutting and removing excess material, **characterized in that** the tool (5) is connected in a locally regulatable manner to the treatment station (E) provided for the fixing of the profiled strand (2) and is mobile between a rest position and a working position in contact with the object (1) fixed in the treatment station (E) by means of an actuating device (8) and **in that** means (10, 11, 17) are provided for the correct, automatic adjustment of the relative position between the tool (5) and the object (1).

9. Device according to claim 8, **characterized in that** the means for adjusting the position comprise at least one fixing face (17) to be applied to the object (1) and a spherical movement support (10, 11) permitting the adjustment thereof relative to one face of the object.

10. Device according to claim 9, **characterized in that** the spherical movement support is formed by a swivel (10) fixed to an upright (7) of the tool (5) and a recess (11) receiving the same in the base plate (12) of the tool (5), said base plate being made regulatable in a base position with respect to the upright (7) by springs (13).

11. Device according to claim 9 or 10, **characterized in that** the tool (5) also comprises a sealing flange (16) to be applied to a perimeter of the object.

12. Device according to claim 11, **characterized in that** the sealing flange (6) and the fixing face (17) are formed in a removable abutment (15) fixed to the base plate (12).

13. Device according to any one of the preceding claims, **characterized in that** the tool (5) comprises a die (20) mobile by means of a jack (21) and having a surface for forming the profiled strand (2).

14. Device according to claim 13, **characterized in that** a forming joint (23) is fixed to the die (20) and during the application of the die (20) to the object, said joint comes into contact with the upper face thereof and with the profiled strand and whose thickness corresponds to the height of the worked, profiled strand.

15. Device according to any one of the preceding claims, **characterized in that** the tool (5) has a cutting edge (19) for cutting excess material from the worked portion of the profiled strand (2).

16. Device according to any one of the preceding claims, **characterized in that** the upright (7) of the tool (5) is regulatable relative to the treatment station (E) for different object shapes.

17. Device according to claim 16, **characterized in that** the actuating device comprises a drive means (8) connected to the upright (7).
